# EUROPEAN PATENT APPLICATION

(11) **EP 2 563 054 A2**
(43) Date of publication of application: **27.02.2013**
(21) Application number: 12275126.6
(22) Date of filing: 23.08.2012
(51) Int. Cl.: H04W 8/26

(54) **Signalling connection in a public land mobile network**

(30) Priority: 23.08.2011 GB 201114590
(71) Applicant: Vodafone IP Licensing Limited, Newbury, Berkshire RG14 2FN (GB)
(72) Inventor: Pudney, Christopher, Newbury, Berkshire RG14 2FN (GB); Lu, Yang, Newbury, Berkshire RG14 2FN (GB); Patanapongpibul, Leo, Newbury, Berkshire RG14 2FN (GB)
(74) Representative: Ellis, Lyle John

(57) **Abstract**

A signalling connection message is sent from a mobile terminal in a Public Land Mobile Networks, PLMN, to the access network. The signalling connection message provides information for a network entity within a core network of the PLMN and indicates a Temporary Mobile Subscriber Identity, TMSI, for the mobile terminal together additional data. The indicated TMSI is a dummy value where a TMSI is not available to the mobile terminal.

## Description

### Technical Field of the Invention

The present invention concerns a controller for a mobile terminal or a network entity (within the access network or core network) of a Public Land Mobile Network (PLMN). The invention also relates to a method for operation of a mobile terminal or a network entity of a PLMN.

### Background of the Invention

Release 11 of the Third Generation Partnership Project (3GPP) Technical Specifications introduces support for Radio Access Network (RAN) sharing in a Multi-Operator Core Network (MOCN). This is particularly being considered for GSM or EDGE RANs.

Two particular issues have been under consideration: (i) how to allow the base station to identify the PLMNs sharing that base station for radio access (ii) how a mobile terminal can indicate the identity of the selected PLMN to the network. The Base Station Subsystem (BSS) can then cause the mobile terminal to be registered with the core network of the selected PLMN, particularly in the Circuit Switched (CS) domain.

The first message sent by the mobile terminal that is intended for the core network is a Location Updating Request (LUR) message. It is desirable that the selected PLMN is indicated in this message. The LUR message identifies the mobile terminal using a Temporary Mobile Subscriber Identity (TMSI). If the mobile terminal does not have a valid TMSI (for example, because the mobile terminal has been rejected by a different network), the International Mobile Subscriber Identity (IMSI) is indicated instead. The IMSI is significantly longer than the TMSI, but it is desirable to indicate the identity of the mobile terminal in order to allow further communication.

Within current specifications, there is limited space for adding the identification of the selected PLMN to the LUR message. A PLMN is normally identified by a Mobile Country Code (MCC) and a Mobile Network Code (MNC). The LUR message is encapsulated in a Set Asynchronous Balanced Mode (SABM) frame. In GERAN, this restricts the message size to 20 octets. Fitting an additional indication of the PLMN identity into the LUR message is therefore challenging.

In the 3GPP TSG GERAN Working Group 2, document GP-111257 made a proposal for addressing this issue. A list of PLMN identities for each PLMN sharing the RAN is broadcast. The mobile terminal can identify the selected PLMN as part of the LUR message using an index derived from this list, instead of the full PLMN identity. In GERAN, this would then help the Base Station Controller (BSC) to determine the PLMN identity selected by the mobile terminal. This PLMN index value may then be coded as part of the "additional update parameters" or "device properties" that are each an optional Information Element (IE) specified in 3GPP Release 10. Alternatively, the index value could be coded as part of a new optional IE.

One downside of this approach is that the Mobile Switching Centre (MSC) of the core network may be connected to two Base Station Controllers, one from a first operator and one from a second operator. When the mobile terminal selects the first operator on that operator's base station controller, the PLMN index value might be 0, for example. Then, the mobile terminal may select the same first operator but on the base station controller of the second operator. The PLMN index value may then be 1, for example. Thus, there may not be a consistent approach between different base station controllers. To deal with these problems, the MSC may need per-cell operation and maintenance of the PLMN identity lists, which may be complex to arrange. The operator of the RAN and the PLMN operators running separate core networks may need to coordinate and arrange joint operations and maintenance.

Alternatives to this approach may include: LUR message segmentation; and introducing a new location updating request message type, for which the PLMN of the "location area identification" is the selected PLMN. Both of these face difficulties, in that they would not be compatible with older (pre-Release 11) network architectures.

Thus, indicating a selected PLMN from a mobile terminal to a network, in such a way that older network architectures need not be adjusted, remains a challenge for radio network design.

### Summary of the Invention

Against this background and in a first aspect, the present invention provides a controller for a mobile terminal using a Public Land Mobile Network (PLMN). The controller comprises: control logic, configured to generate a signalling connection message indicating a Temporary Mobile Subscriber Identity (TMSI) for the mobile terminal together with additional data and further configured to control a transmitter of the mobile terminal to send the signalling connection message to the base station. The signalling connection message provides information for a core network of the PLMN. The indicated TMSI is a dummy value when a TMSI is not available to the mobile terminal. Thus, the indicated TMSI may not be a valid TMSI or may be a TMSI and/or LAI combination that is known not to be in use by any network.

Thus, an IMSI is not transmitted by the mobile terminal as part of the signalling connection message (for example, the Location Update Request, LUR, message). Such messages are beneficially part of the Circuit Switched domain signalling. Moreover, these messages are particularly employed in GERAN/EDGE network architectures. Where the mobile terminal does not have an available TMSI (within the meaning of 3GPP TS 24.008 v10.7.0 section 10.5.1.4), it uses a dummy or false value (for instance, where all bits of the TMSI are set to 1), rather than sending the IMSI. The dummy value may be chosen to act as an indicator to the access or core network that the mobile terminal does not have a valid TMSI, for example when it has not been allocated a TMSI or when at some previous time the mobile was allocated a TMSI but that TMSI has subsequently been deleted. Since the IMSI is much longer than the TMSI, this strategy avoids sending the IMSI and thereby increases the amount of spare capacity in the LUR message. This allows the mobile terminal to provide additional data as part of the signalling connection message. Such additional data would previously have been quite limited in nature, either being directly defined by the 3GPP technical specifications or being heavily restricted in size. By avoiding the need to transmit the IMSI as part of the signalling connection message, the quantity of additional data that may be transmitted is increased. This approach is also compatible with older networks.

A mobile terminal comprising the controller according to the first aspect, with or without any of optional, preferable or advantageous features described below is also provided.

Optionally, the additional data within the signalling connection message provides information for the network entity within the core network of the PLMN. Additionally or alternatively, it may provide information to determine the network entity within the core network of the PLMN.

Specifically, this technique may be widely applicable within MOCN architectures. In the preferred embodiment, the mobile terminal is arranged to communicate with a selected PLMN from a plurality of PLMNs that share a base station for radio access. Then, the control logic may be configured such that the additional data within the signalling connection message comprises an indication of the selected PLMN. Thus, a full indication of the selected PLMN identity may be provided as part of the identification message.

Advantageously, the control logic is further configured to receive an Identity Request message from the base station. The control logic may then be configured to control the transmitter of the mobile terminal to send an International Mobile Subscriber Identity (IMSI) for the mobile terminal in response to the received identity request message. Thus, the dummy value for the indicated TMSI causes the network to request the IMSI specifically, within the distinct specifications. The additional overhead required to achieve this is therefore low.

Optionally, the control logic is further configured to receive a list of the plurality of PLMNs from the base station. The indication of the selected PLMN in the identification message may then be based on the received list. Alternatively, the indication of the selected PLMN in the identification message may comprise the Mobile Country Code (MCC) and Mobile Network Code (MNC) of the PLMN. Where a list is used, as suggested in technical document GP-111257, the amount of additional signalling may be limited. The list may be specific to the base station or a common list may be provided for a group of base stations.

In a second aspect, there is provided a controller for a network entity of a Public Land Mobile Network (PLMN). The controller comprises: control logic, configured to receive a signalling connection message from a mobile terminal indicating a TMSI for the mobile terminal together with additional data. The signalling connection message provides information for a core network of the PLMN. The control logic is further configured to identify if the indicated TMSI is a dummy value. This may indicate that a TMSI is not available to the mobile terminal. The dummy TMSI may not be a valid TMSI.

A network entity for the radio access or core network of a PLMN comprising the controller according to the second aspect, with or without any of optional, preferable or advantageous features described below is also provided. The network entity may, for instance, be part of the access network such as a Base Station Subsystem (BSS), Base Transceiver Station (BTS), Base Station Controller (BSC) or part of the core network such as a Mobile Switching Centre (MSC).

Preferably, the PLMN shares a base station with at least one other PLMN for radio access. Then, the control logic may be configured such that the additional data comprises an indication of the PLMN or one of the at least one other PLMN selected by the mobile terminal.

Optionally, the control logic is further configured to generate a list of the plurality of PLMNs. The control logic may then be further configured to control the base station (advantageously, a transmitter of the base station) to transmit the list. The indication of the selected PLMN may be based on the transmitted list.

When the network entity is in the access network of the PLMN, the control logic may be further configured to control the network entity to send information obtained from the identification message to a network entity in the core network of the selected PLMN. Preferably, the network entity in the core network is a Mobile Switching Centre (MSC).Where the network entity is in the core network of the PLMN, signalling connection message received from the mobile terminal may be passed from a network entity in the access network first.

A number of optional features may be considered with the second aspect of the invention, dependent on whether the identification that the indicated TMSI is a dummy value (identifying that a TMSI is not available to the mobile terminal) is carried out in the base station subsystem (BTS, BSC or both) or in the core network entity, such as the MSC. These are discussed below.

Advantageously, the control logic is further configured to generate an identity request message in response to an identification that the mobile terminal does not have a valid TMSI. The control logic may then cause the base station to send the identity request message to the mobile terminal. If the control logic is part of a controller for a network entity in the access network, this may be effected by controlling a base station to send the identity request message. If the control logic is part of a controller for a core network entity such as an MSC, this may be effected by controlling the network entity to send the identity request message to a base station for transmission to the mobile terminal.

Where the controller is for a core network entity, the generation of the identity request message may be in response to receipt of a layer 3 information message comprising the dummy TMSI from the access network, such as base station subsystem.

Optionally, the controller is further configured to receive an International Mobile Subscriber Identity (IMSI) for the mobile terminal in response to the sending of the identity request message. Where the controller is for the network entity in the access network, a base station may then send a complete layer 3 information message comprising the IMSI to the network entity in the core network of the selected PLMN, such as the MSC.

In the preferred embodiment, the core network of the PLMN comprises a Mobile Switching Centre, MSC. Most preferably, the signalling message provides information for the MSC.

Beneficially, the signalling connection message is one of: a Location Updating Request (LUR) message; a Connection Management Service Request message; a Paging Response message; and a Connection Management Reestablishment Request message. Beneficially, the signalling connection message is a LUR message and further indicates information of a previous location for the mobile terminal, such as a Location Area Identity (LAI). The additional data preferably comprises the information of a previous location for the mobile terminal. Then, the complete layer 3 information message sent from the base station to the core network entity of the selected PLMN may comprise this information of a previous location.

In yet another aspect, there is provided a method for operation of a mobile terminal using a PLMN. The method comprises: sending a signalling connection message from the mobile terminal to the base station, the signalling connection message indicating a TMSI for the mobile terminal together with additional data. The signalling connection message provides information for a network entity within a core network of the PLMN. The indicated TMSI is a dummy value, when the mobile terminal does not have an available TMSI.

In a yet further aspect of the present invention, a method for operation of a network entity of a PLMN (that is, within a cellular network architecture) is provided. The method comprises: receiving a signalling connection message from the mobile terminal at the network entity, the signalling connection message indicating a TMSI for the mobile network together with additional data; and identifying that the indicated TMSI is a dummy value and thereby establishing that a TMSI is not available to the mobile terminal. The network entity may be part of the access network such as a base station or base station controller or a network entity in the core network, such as a Mobile Switching Centre (MSC).

It will be understood that these method aspects can optionally comprise steps or features used to carry out any of the actions described in connection with the controllers detailed above. Also, any combination of the individual apparatus features or method features described may be implemented, even though not explicitly disclosed.

In another aspect, the present invention may be found in a computer program, configured when operated by a processor to carry out any of the methods disclosed herein. Alternatively, the present invention may be embodied in programmable logic, configured upon operator to carry out any of the methods disclosed herein.

### Brief Description of the Drawings

The invention may be put into practice in various ways, a number of which will now be described by way of example only and with reference to the accompanying drawings in which:
Figure 1 illustrates a message flow diagram between entities in a cellular network in accordance with a first embodiment of the present invention; and
Figure 2 shows a message flow diagram between entities of a cellular network according to a second embodiment of the present invention.

### Detailed description of preferred embodiments

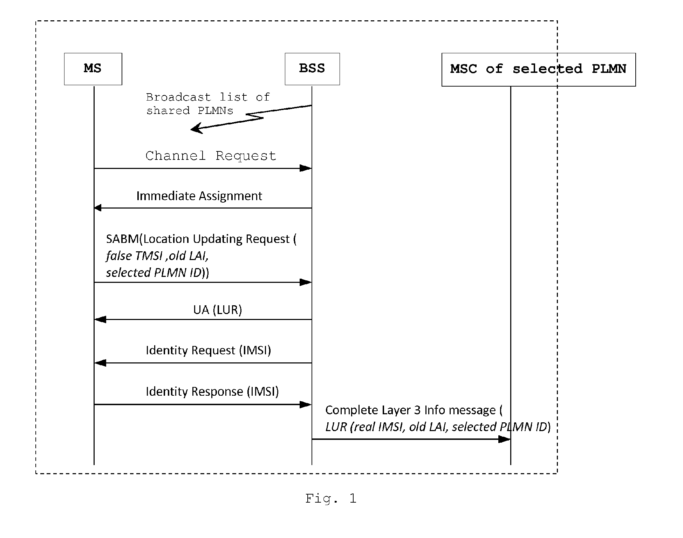

Referring first to Figure 1, there is shown a first message flow diagram, between entities within a cellular network, in accordance with a first embodiment of the present invention. Messages from and to a mobile terminal or Mobile Station (MS) are indicated on the left hand side. In the middle are messages to and from a base station, which in this particular embodiment is a Base Station Subsystem (BSS). The BSS is configured to use Multi-Operator Core Network (MOCN) and therefore interfaces with multiple core networks each of which is for a different network operator. On the right hand side are shown messages from and to the Mobile Switching Centre (MSC) in the core network of the PLMN selected by the MS. Each PLMN will have its own MSC. Moreover, it will be apparent that the time chronology of messages is indicated from top to bottom, with the earliest messages being closer to the top.

Firstly, the BSS broadcasts a list of the PLMNs that share it for radio access. The MS then transmits a channel request message to the BSS. The BSS replies with an immediate assignment of a channel.

The MS then transmits a Set Asynchronous Balanced Mode (SABM) frame. This comprises a Location Updating Request (LUR) message. Where the MS has a valid TMSI, the LUR message may use this TMSI. In some cases, the MS will not have a valid TMSI. Here, the MS transmits a false or dummy TMSI. The TMSI may be set so that all of its bits are 1. The LUR message further comprises the previous Location Area Identity (LAI) for the MS. Moreover, it comprises the selected PLMN identity. This can either be the Mobile Country Code (MCC) and Mobile Network Code (MNC) of the PLMN or a pointer (such as a three-bit pointer) to the selected PLMN in the list of broadcast PLMNs.

The BSS then responds with an Unnumbered Acknowledge (UA) message, specific to the LUR message. This is followed by an identity request (IMSI) message from the BSS to the MS, requesting the IMSI of the MS. The MS then sends an identity response message to the BSS, indicating its IMSI.

The BSS then has all of the information needed to send a complete layer 3 info message to the BSS. This message comprises the LUR message. That LUR message is made up of the real IMSI of the MS, the previous LAI for the MS and the selected PLMN ID. That complete layer 3 information message is sent from the BSS to the MSC of the selected PLMN.

Where the selected PLMN ID in the LUR message from the mobile station to the BSS comprises a pointer, the BSS inserts the MCC and MNC into the A interface signalling. This may be done as a BSSMAP Information Element (IE) or as an IE specified in the 3GPP TS 24.008 in the LUR message.

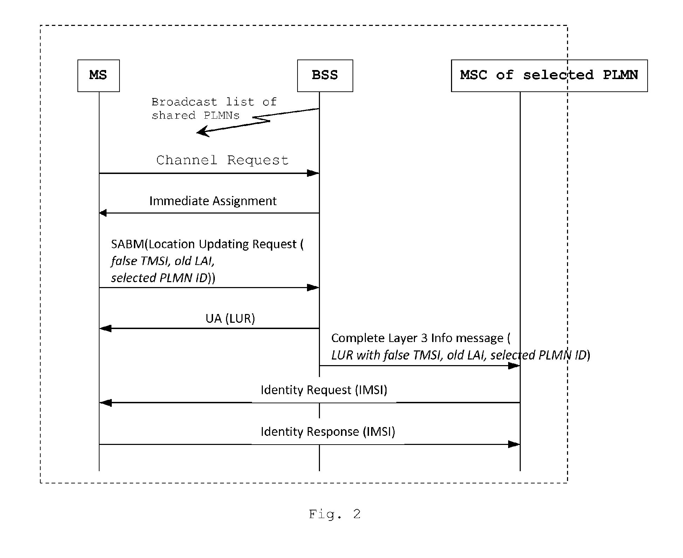

Referring to Figure 2, there is shown a message flow diagram between entities of a cellular network architecture in accordance with a second embodiment of the present invention. The message flow diagram is laid out in the same way as in Figure 1.

The initial message flow in the second embodiment is identical to that of the first embodiment. The BSS broadcasts a list of the shared PLMNs. The MS sends a channel request message to the BSS. The BSS responds with an immediate assignment message to the MS. Then, the MS transmits a SABM frame. This comprises an LUR message with a TMSI, previous LAI and selected PLMN identity. The BSS then responds with a UA (LUR) message to the MS.

Unlike the first embodiment, the BSS does not then send an identity request message to the MS. Instead, it sends a complete layer 3 information message to the MSC of the selected PLMN. This comprises the LUR message, but includes the false or dummy TMSI. The previous LAI and selected PLMN identity are also indicated.

Then, the MSC sends an identity request message to the MS to request the IMSI. The MS responds with an identity response message, indicating the IMSI. This is sent directly to the MSC of the selected PLMN. Thus, the MSC checks the identity of the MSS and not the BSS. The other optional implementation features described in relation to the first embodiment may also be applied in respect to this second embodiment.

As identified above, the core network thereby allocates TMSIs to the mobile stations. As the MS sends a TMSI and not an IMSI, there are several bytes spare in the 20 bytes of the LUR message.

Transmitting a TMSI with all bits set to 1 has particular advantages. Since GSM phase 2, 3GPP TS 23.003 has mandated that networks do not allocate such TMSIs. All legacy networks should comprehend such TMSI. Consequently, such TMSI can be particularly useful for backward compatibility.

This approach therefore provides generic mechanisms for this and future extensions to the location update procedures in the GSM CS domain. It may add three octets of extra signalling capacity in the LUR message.

Although embodiments of the invention have been described above, the skilled person may contemplate various modifications or substitutions. In particular, the skilled person will appreciate that the information regarding the selected PLMN may be replaced (or supplemented) by any additional information that may be provided when opening a signalling connection with a cellular network. It provides a generic mechanism for extensions to the Location Update procedures (and similar signalling messaging) in GSM, especially in the CS domain. Three octets of extra signalling capacity may be made available. Thus, it may also be applied to non-MOCN systems.

Also, the technique may be applied to other signalling connection messages than just the LUR message, for instance, a Connection Management (CM) Service Request message; a Paging Response message; and a CM Reestablishment Request message.

Even where the additional data comprises information about the selected PLMN, other changes are possible to the embodiments described above. For example, the invention has been described with respect to MOCN for a GERAN or EDGE network. However, the invention may be applied to other types of cellular network architecture. Similar messages and constraints are applicable.

The BSS need not broadcast a list of the shared PLMNs. This information could be acquired by the MS in other ways. Also, the channel request message and immediate assignment message might be omitted in other embodiments of the invention, where appropriate.

## Claims

1. A controller for a mobile terminal using a Public Land Mobile Network, PLMN, comprising:
control logic, configured to generate a signalling connection message indicating a Temporary Mobile Subscriber Identity, TMSI, for the mobile terminal together with additional data and further configured to control a transmitter of the mobile terminal to send the signalling connection message to an access network used by the PLMN, the signalling connection message providing information for a core network of the PLMN; and
wherein the indicated TMSI is a dummy value when a TMSI is not available to the mobile terminal.

2. The controller of claim 1, wherein the mobile terminal is arranged to communicate with a selected PLMN from a plurality of PLMNs that share a base station for radio access, the control logic being configured such that the additional data within the signalling connection message comprises an indication of the selected PLMN.

3. The controller of claim 2, wherein the control logic is further configured to receive an identity request message from the base station and to control the transmitter of the mobile terminal to send an International Mobile Subscriber Identity, IMSI, for the mobile terminal in response to the received identity request message.

4. A controller for a network entity of a Public Land Mobile Network, PLMN, comprising:
control logic, configured to receive a signalling connection message from a mobile terminal indicating a Temporary Mobile Subscriber Identity, TMSI, for the mobile terminal together with additional data, the signalling connection message providing information for a core network of the PLMN; and
wherein the control logic is further configured to identify if the indicated TMSI is a dummy value.

5. The controller of claim 4, wherein the PLMN shares a base station with at least one other PLMN for radio access and wherein the control logic is configured such that the additional data comprises an indication of the PLMN or one of the at least one other PLMN selected by the mobile terminal.

6. The controller of claim 5, wherein the control logic is further configured to generate a list of the plurality of PLMNs and to control the base station to transmit the list, the indication of the selected PLMN being based on the transmitted list.

7. The controller of claim 5 or claim 6, wherein the control logic is further configured to generate an identity request message in response to a identification that a TMSI is not available to the mobile terminal and to cause the base station to send the identity request message to the mobile terminal.

8. The controller of any one of claims 4 to 7, wherein the network entity is a base station subsystem of the PLMN.

9. The controller of any one of claims 4 to 7, wherein the network entity is within the core network of the PLMN.

10. The controller of any preceding claim, wherein the core network of the PLMN comprises a Mobile Switching Centre, MSC, the signalling message providing information for the MSC.

11. The controller of any preceding claim, wherein the signalling connection message is one of: a Location Updating Request message; a Connection Management Service Request message; a Paging Response message; and a Connection Management Reestablishment Request message.

12. The controller of claim 11, wherein the signalling connection message is a Location Updating Request message and the additional data further comprises a previous location for the mobile terminal.

13. A method for operation of a mobile terminal using a Public Land Mobile Network, PLMN, the method comprising:
sending a signalling connection message from the mobile terminal to the base station, the signalling connection message indicating a Temporary Mobile Subscriber Identity, TMSI, for the mobile terminal together with additional data, the signalling connection message providing information for a network entity within a core network of the PLMN; and
wherein the indicated TMSI is a dummy value when a TMSI is not available to the mobile terminal.

14. A method for operation of a network entity of a Public Land Mobile Network, PLMN, the method comprising:
receiving a signalling connection message from the mobile terminal at the network entity, the signalling connection message indicating a Temporary Mobile Subscriber Identity, TMSI, for the mobile terminal together with additional data, the signalling connection message providing information for a network entity within a core network of the PLMN; and
identifying that the indicated TMSI is a dummy value and thereby establishing that a TMSI is not available to the mobile terminal.

15. A computer program configured to carry out the method of claim 13 or claim 14 when operated by a processor.
